# EUROPEAN PATENT SPECIFICATION

(11) **EP 3 789 968 B1**
(45) Date of publication and mention of the grant of the patent: **12.11.2025**
(21) Application number: 19195616.8
(22) Date of filing: 05.09.2019
(51) Int. Cl.: H04L 9/34, G07C 5/00, G07C 5/08, G06F 21/64

(54) **METHOD FOR VALIDATING VEHICLE DATA OF A DESIGNATED VEHICLE**
VERFAHREN ZUR VALIDIERUNG VON FAHRZEUGDATEN EINES BESTIMMTEN FAHRZEUGS
PROCÉDÉ DE VALIDATION DE DONNÉES D'UN VÉHICULE DÉSIGNÉ

(43) Date of publication of application: 10.03.2021
(73) Proprietor: Audi AG, 85045 Ingolstadt (DE)
(72) Inventor: NEWMAN, John, 85049 Ingolstadt (DE)
(74) Representative: Hofstetter, Schurack & Partner

(56) References cited:
- US-A1- 2013 110 344
- US-A1- 2017 228 410

## Description

The invention is concerned with a method for validating vehicle data of a designated vehicle as well as a vehicle with a data collecting device, wherein the vehicle is designed to conduct corresponding steps for a data collecting device of such a method.

Obtaining vehicle data plays a critical role in a variety of economically important activities, such as vehicle evaluation, vehicle fleet management, or diagnostic and repair activities concerning a vehicle. In this context, it is important to ensure that a vehicle is capable of collecting and transmitting data. However, most vehicles in use today are still completely unconnected or only have a limited level of connectivity to other vehicles and/or infrastructure units. One way to obtain vehicle data from such unconnected or limitedly connected vehicles involves installing a so-called dongle solution. This means that a physical device, which can be referred to as a dongle device, is plugged into an on-board diagnostics (OBD) port of the vehicle. Once the dongle device is plugged in, vehicle data provided by the OBD system of the vehicle can be downloaded and read. Therefore, a direct wired communication connection to the OBD system of the vehicle can be established in a vehicle workshop. Alternatively, a wireless connection between, for example, a mobile communication device such as a smartphone and the OBD system can be established via a Bluetooth connection and/or a wireless local network such as a wireless local area network (WLAN). It is also possible to build in a subscriber identity module (SIM) card into the dongle device itself in order to obtain vehicle data from the OBD system. The OBD system preferably offers a OBD2 port for data extraction. Furthermore it is possible to retrofit a vehicle by adding a physical device which is capable of reading vehicle data from the OBD system of the vehicle it is installed in. This means that, for example, a data logger is built into a vehicle that monitors and collects data from the OBD system, particularly any vehicle data provided by a vehicle electrical system or subsystem via a bus system of the vehicle such as a control area network (CAN)-bus, a FlexRay system, a media oriented system transport (MOST)-bus, a local interconnected network (LIN)-bus and/or an Ethernet system)

Document US 2012/0209634 A1 discloses a data locking device that tracks an operation of a vehicle or actions of a driver of the vehicle. The device may communicate with one or more machine or vehicle component to acquire information from the vehicle that describe or represent vehicle operation or characteristics, or driving behavior. Vehicle operation may be monitored through one or more sensors. With the system it is possible to determine a cost of insurance for the vehicle based on the tracked operation of the vehicle or driver actions.

In document US 6,356,823 B1 a motor vehicle data collection, monitoring and managing system is disclosed, that is designed for ready connection to the vehicle's onboard data network through the data interface provided by the vehicle manufacturer. The data collecting and monitoring system exhibits power saving features including automatic shutdown when the motor vehicle is switched off.

Document US 2013/0110344 A1 discloses a client system for vehicle diagnostics. A client request for captured vehicle data of the vehicle may include vehicle identification data and client settings so that the captured vehicle data provided to the client is from another client configured to the same client settings and from a type of vehicle that matches a vehicle-type identified by the vehicle identification data. Document US2017/228410 A1 discloses another method for validating vehicle data according to the state of the art.

It is an object of the present invention to provide a method to validate reliably vehicle data of a designated vehicle.

The object is accomplished by the subject matter of the independent claims.

Advantageous developments with convenient and non-trivial further embodiments of the invention are specified in the following description, the dependent claims and the figures.

The inventive method is based on the realization that, regarding a typical potential application based on vehicle data received from an on-board diagnostics (OBD) system, guaranteeing the integrity of the received vehicle data is paramount. An OBD system is a vehicle self-diagnostics and reporting system that is designed to give a vehicle owner or repair technician access to the status of various vehicle subsystems. This is for example the case in connection to user based insurance contracts, a characterization of vehicle status, e.g., in order to inform a potential buyer about a vehicle, or a characterization of vehicle performance associated with valid accurate vehicle data. However, it is often difficult to guarantee the integrity of vehicle data that is provided by a vehicle. The reason for this is that one cannot easily distinguish between vehicle data generated by the vehicle itself and vehicle data that has been manipulated. Manipulated vehicle data has been generated, for example, on a server unit that is not part of the vehicle that allegedly provides the specific vehicle data. Such manipulated vehicle data is hence inaccurate and constructed vehicle data and could be referred to as spoofed vehicle data. Manipulated vehicle data is often created in order to create simulation basis data based on which one can simulate occurring events during driving a vehicle. Therefore, such manipulated vehicle data could be easily masqueraded as real vehicle data of a designated vehicle. The reason for this is that a typical data collector often collects vehicle data in a predictable way since vehicle data packages are typically collected in a standard pattern of data packages such as the pattern A, B, C, A, B, C and so on. Each of these packages A, B, C comprises at least one signal, wherein the signal has fixed properties (e.g. is provided as signal of a specific data type such as integer, float or double), is often triggered in a predictable way (e.g. every 10 seconds, upon change of state) and/or has a defined value (e.g. between 0 and 255). This predictability is beneficial for data processing, but may create a security and/or authenticity risk inasmuch as one can manipulate such data. This is why a reliable protection strategy for validating vehicle data is highly interesting for the above described typical potential applications of vehicle data.

The inventive method for validating vehicle data of a designated vehicle comprises, as a first step, transmitting a configuration file to a data collecting device of a vehicle. This vehicle to which the configuration file is sent is presumed to be the designated vehicle and is in the following referred to as the presumed vehicle. The presumed vehicle is hence the vehicle that is allegedly the designated vehicle. The data collecting device is typically a central electronic control unit of the vehicle. The data collecting device is, for example, designed to demand and/or control submission of vehicle data provided by a respective control unit of a specific vehicle part (e.g. an vehicle engine), a specific vehicle function (e.g. a navigation system), and/or a vehicle sensor device (e.g. a temperature sensor).

The configuration file comprises at least one transmission request signal for specific vehicle data of the designated vehicle. The configuration file therefore comprises, for example, a list of at least one and preferably multiple different data elements of respective data type that are of interest for a source of the at least one transmission request signal. The at least one data element of the list is accordingly the at least one transmission request signal. This means that each transmission request signal comprises details signaling which data element or data elements are requested to be provided, i.e., to be transmitted. In general, the configuration file asks for a signal and/or a sampling frequency of vehicle data and could also include some conditional logic, e.g., upon a specific change of state of a vehicle component. If, for example, specific data of the vehicle is acquired non-continuously, i.e., only upon a respective change of state of a specific vehicle component, such data could only be retrieved if it has already been detected. This could be taken into account by including a respective conditional logic. Such non-continuously acquired data could be, for example, a signal from fastening or unfastening a seat belt within the vehicle and/or from an activation event of an electronic equipment of the vehicle such as an air conditioning system and/or a multimedia system. The source of the at least one transmission request signal could be a vehicle selling platform that has been contacted by a potential buyer of the presumed vehicle. The specific vehicle data that is requested according to the configuration file could be, for example, an odometer reading value, an engine temperature, an outdoor temperature, a vehicle velocity, a vehicle acceleration and/or any other type of vehicle data that is typically provided by an OBD system.

In a next step that is performed by the data collecting device, the requested specific vehicle data is retrieved according to the at least one transmission request signal from at least one control unit of the presumed vehicle. The specific vehicle data that are of interest due to the request signal are provided by at least one individual control unit of the vehicle. This control unit could be, as already described above, an electronic control unit for a specific vehicle part, a specific vehicle function, and/or a vehicle sensor device. Preferably, the at least one control unit is a control unit of a drive system, a brake system, and/or a steering system of the presumed vehicle. As a result of the multiple intended purposes of the at least one control unit, either raw data such as raw sensor device data, or preprocessed and therefore already edited data such as an average velocity and/or a temperature change over time can be provided by the at least one control unit for the data collecting device. If, due to the configuration file, raw data from the drive system is required, this raw data could contain the odometer reading value of the vehicle. As preprocessed data an average total distance driven per day could be provided. Though, the retrieved specific vehicle data corresponds to the vehicle data that is requested due to the transmission request signal or signals of the configuration file.

In a next step, the retrieved specific vehicle data are assembled as a specific data item according to a prescribed data assembling rule. This is performed by the data collecting device. The prescribed data assembling rule contains at least a definition and/or a regulation specifying that, for example, the current odometer reading value is supposed to be transmitted first, followed by the value for the average total length driven per day, followed by temperature data measured by a temperature sensor system of the vehicle. The prescribed data assembling rule therefore contains, for example, a specific pattern in which the different retrieved specific vehicle data are supposed to be assembled. Preferably, the prescribed data assembling rule regulates that vehicle data of multiple data sources are queried in a random and unpredictable order, instead of being collected in a standard pattern of data such as the pattern A, B, C, A, B, C. In order to reach a reduction of the above described security and/or authenticity risks, any number of parameters can be changed to make the specific data item less predictable. This could be achieved by mixing up the pattern, e.g., to the pattern A, B, C, B, C, A, C, B, and so on. Alternatively or additionally, convolution of data could be applied by calculating new signals according to a predefined calculation rule resulting, for example, in the signals A plus value x, B minus value y, C plus value z, and so on. Alternatively or additionally in between the pattern of individual signals random predefined signals such as predefined numbers could be interpolated resulting in the signal pattern A, B, 456782, C, 345817, B, C, and so on. It is also possible to apply a combination of the described parameter changes to assemble the retrieved specific vehicle data as specific data item. The specific data item is thus a data item created based on ordering, convoluting or supplementing individual data elements of the retrieved specific vehicle data.

The thereby produced specific data item is then transmitted from the data collecting device to an evaluation unit. The evaluation unit is preferably an off-vehicle server unit. The off-vehicle server unit could be provided by the manufacturer of the designated vehicle and/or by the vehicle selling platform. The off-vehicle server unit is, for example, designed as a computer such as a network host. Alternatively, the evaluation unit is on board of the vehicle and could be integrated into the data collecting device or be a component of the vehicle that is separated from the data collecting device. Even if no communication connection can be built up between the vehicle and the off-vehicle server unit, e.g., in a remote area, further steps could be performed by the on-board evaluation unit. However in the following, it is assumed that the off-vehicle server unit is used as evaluation unit.

The evaluation unit, i.e., herein the off-vehicle server unit then performs a disassembling of the transmitted specific data item according to a prescribed data disassembling rule. The prescribed data disassembling rule contains information on how to unpack the previously assembled data item so that individual packages of data of different types can each be differentiated from each other. Whereby the disassembling of the transmitted specific data item, it is verified if the transmitted specific data item features the prescribed data assembling rule. The off-vehicle server unit checks thus if the individual data packages were transmitted in the order they are expected to be sent over due to the prescribed data assembling rule. The prescribed data assembling rule is hereby known to the data collecting device of the vehicle and is therefore unique for the presumed vehicle.

Only if the transmitted specific data item features the prescribed data assembling rule, the disassembled specific vehicle data is validated as the vehicle data of the designated vehicle. This means that only if the way the retrieved specific vehicle data was assembled matches the way it is expected for vehicle data provided by the designated vehicle it is possible to state that the specific data item that was received from the vehicle that has been so far only be presumed to be the designated vehicle is valid. This validation result is derived from the observation that apparently the data assembling rule used by the presumed vehicle matches the expected data assembling rule of the designated vehicle. Once the disassembled specific vehicle data is validated as the vehicle data of the designated vehicle the validated specific vehicle data is provided. This makes it possible to, for example, store a signal within the off-vehicle server unit that indicates that vehicle data transmitted and received from the specific designated vehicle is considered valid. In conclusion a certificate is given to the designated vehicle that stands as a guarantee for validity of vehicle data provided by this vehicle. Moreover, the described method allows to reliably state that the presumed vehicle is the designated vehicle because otherwise the transmitted specific data item would not feature the prescribed data assembling rule associated with the designated vehicle.

Nonetheless, it should be taken into account that data collected as specific vehicle data originate from a diverse set of control units, i.e., from electronic control units and/or sensor devices within the vehicle. Each control unit has its own characteristic signature, wherein the characteristic signature in this context paraphrases the prescribed data assembling rule that defines the order in which the individual collected data packages are ordered. The finally received specific data item is analyzed independently of the vehicle in an off-vehicle device, i.e., the off-vehicle server unit in order to identify whether the specific vehicle data is likely to have been generated by the designated vehicle or by an off-vehicle device such as a computer or a signal generator.

Data transmission and/or exchange between the server unit and the vehicle, i.e., the data collecting device, can be realized via a wireless communication connection between the server unit and a communication unit of the presumed vehicle. The wireless communication connection can be established via a wireless local network such as a wireless local area network (WLAN), or via a mobile data network based on mobile radio standard Long Term Evolution (LTE) or Fifth Generation (5G).

The advantage of the described method for validating vehicle data of a designated vehicle is thus to make it significantly more difficult for anybody to masquerade manipulated vehicle data as real vehicle data. Because a strategy is employed that collects both desired signals, which are specified by the configuration file, together with a vehicle typical permission signal that is given in form of the prescribed data assembling rule stored in the data collecting device. This specific data assembling rule can be already stored within the vehicle the moment the vehicle is delivered to its buyer and future owner, guaranteeing trustworthiness into the validation result. Furthermore, this method allows to validate vehicle data as trustworthy and unmanipulated with minimum effort since all information necessary to perform the validation of given vehicle data is contained in the prescribed data assembling rule and the configuration file. This also allows to create a curriculum vitae (CV) for a designated vehicle that comprises the certificate certifying that the vehicle data from a particular designated vehicle is trustworthy. Also in the context of fraud associated with false reporting of how many kilometers or miles a vehicle has been driven so far, this validation method can be used to make sure that the odometer reading value is reported correctly, since any falsely loaded vehicle data on the vehicle can be identified. Since in such a case the assembling of the retrieved specific vehicle data would not match the prescribed data assembling rule.

Due to the random and unpredictable order in which the retrieved specific vehicle data is assembled, it is possible to increase confidence in vehicle data reported by a vehicle by first validating the vehicle data with the described method. In the end reliable vehicle data can be provided, wherein the reliable vehicle data is linked to the specific designated vehicle.

The invention comprises that the prescribed data assembling rule is created by the data collecting device according to a creating rule that is unique to the designated vehicle. This means that the data assembling rule is not necessarily predetermined and fixed but could be changed. The change could, for example, be generated by a software program installed in the data collecting device of the vehicle. This software program generates the specific pattern following a prescribed creating rule. Therefore, it is still possible to identify the designated vehicle with the help of applying the known details of the data assembling rule on the disassembled specific vehicle data since any newly created data assembling rule is created based on the prescribed creating rule. A well-known encryption technique could also be applied while generating a data assembling rule to make sure that although the data assembling rule is changing from time to time it is still determinable for the off-vehicle server unit that the transmitted specific data item features the prescribed data assembling rule at a current time. In order to protect the system from manipulation the possibility to change the applied data assembling rule can be crucial. Because this complicates potential hacking of a data collecting device in order to gain access to a currently used data assembling rule if this rule could in principle be changed at any time. So reliability of the validation result is further increased.

According to the inventive method, the prescribed data assembling rule comprises a pattern definition specifying an order in which the retrieved specific vehicle data is assembled. The pattern definition specifies for example that first the total length of driven distance, i.e., an odometer reading value, is positioned within the specific vehicle data sequence, followed by an engine temperature value and an outdoor temperature value. If this order is in some way switched and hence does not match the pattern definition it can be determined that, for example, the presumed vehicle is not the designated vehicle and/or that the vehicle data were tampered with. This content of the prescribed data assembling rule provides accordingly an easy solution to make sure that the transmitted specific data item contains reliable vehicle data such as reliable OBD system data.

The invention also comprises embodiments that provide features which afford additional technical advantages.

An embodiment discloses that the prescribed data assembling rule comprises a filler rule specifying at least one specific data package to be embedded at a respective predefined position within the specific data item. It is therefore known regarding the at least one specific data package where it is embedded within the specific data item relative to the respective retrieved specific vehicle data packages. The specific data package can contain filler data, for example, a six-digit number that is put in between two following elements of retrieved specific vehicle data. The six-digit number could, for example, be positioned between the odometer reading value and the engine temperature value within the specific data item. Whenever the six-digit number is detected while disassembling the transmitted specific data item according to the data disassembling rule it is taken for verified that the vehicle data is transmitted from the designated vehicle and/or the vehicle data is unmanipulated. The specific data package can be individually chosen for each designated vehicle. It is typically stored in the data collecting device of the vehicle. Alternatively or additionally to the described specific data package, it is possible to add additional specific vehicle data as filler data to the specific data item. Alternatively or additionally, the specific vehicle data could be created by a procedure similar to a transaction performed by an authentication number (TAN) system that is typically used for online banking services. Where and what kind of specific data package is included into the specific data item is preferably only known to the off-vehicle server unit and the data collecting device. Therefore, it is possible to increase favorably reliability of the validating method by building the at least one specific data package into the specific data item.

In an embodiment of particular interest, the creating rule is modified in specific time intervals and/or after a specific amount of received configuration files. This means that the order in which the data collecting device assembles the retrieved specific vehicle data and, if applicable, the at least one specific data package changes over time to make it more difficult to manipulate vehicle data. It is therefore possible to change the applied data assembling rule regularly, for example, every hour, every day, every week and/or every month. Alternatively or additionally it is possible to change the data assembling rule, for example, every fifth time vehicle data are requested to be validated for a particular vehicle. Then, the modification would be applied after a specific amount of received configuration files. By doing so, an additional security level is added to the reliability of the validation performed based on the prescribed data assembling rule. This contributes to providing a method for validating vehicle data of the designated vehicle that is at any time reliable and hard to crack.

Another embodiment discloses that as specific vehicle data raw sensor data and/or processed data are retrieved from the at least one control unit. Depending on what is requested due to the configuration file it is thus possible to access all kinds of vehicle data that are typically stored in an OBD system to be analyzed during the described validation method. This makes a broad range of potential request signals possible. Since not only specific already evaluated data describing the vehicle can be provided but also raw data itself that can be then further evaluated for example with the off-vehicle server unit.

In another embodiment it is disclosed that the configuration file is transmitted as an encrypted file. It is thus not possible for a third party to directly read the configuration file to find out what kind of vehicle data is requested from the vehicle. Also the data collecting device has the described data assembling rule stored as an encrypted document so that nobody who is not supposed to access this information can read both the configuration file and the prescribed data assembling rule. This adds another layer of reliability to the described procedure. This also means that a corresponding decryption file is stored in the data collecting device as well as in the off-vehicle server unit to make sure to be able to decrypt the earlier sent encrypted files.

The invention also discloses a vehicle with at least one control unit and a data collecting device. The data collecting device of this vehicle is designed to conduct corresponding steps for the data collecting device of a method as described above. The invention also comprises embodiments of the inventive vehicle that comprise features that correspond to features as they have already been described in connection with the embodiments of the inventive method. For this reason, the corresponding features of the embodiments of the inventive vehicle are not described here again.

The inventive vehicle is preferably designed as a motor vehicle, in particular as a passenger vehicle or a truck, or as a bus or a motorcycle.

The invention also discloses a system comprising a vehicle as described above as well as an off-vehicle server unit. The off-vehicle server unit is, for example, designed as a computer such as a network host. The system is designed to conduct a method as it was described above. The invention also comprises embodiments of the inventive system that comprise features that correspond to features as they have already been described in connection with the embodiments of the inventive method. For this reason, the corresponding features of the embodiments of the inventive system are not described here again.

In order to perform the inventive method, the invention also provides a processing unit an evaluation unit such as an off-vehicle server unit, a data collecting device, and/or a control unit comprising at least one processor and a data memory coupled to the at least one processor, wherein the processing unit is designed to perform corresponding steps for the evaluation unit, the data collecting device, and/or the control unit of an embodiment of the inventive method, respectively. The at least one processor may each be based on one of a microprocessor and a microcontroller and an ASIC (application specific integrated circuit). For performing the inventive method, the data memory may comprise computer readable instructions that -when executed by the at least one processor- cause the at least one processor to perform the embodiment of the inventive method. The processing unit may comprise one or more microprocessors and/or one or more microcontrollers. Further, the processing unit may comprise program code that is designed to perform the described method when executed by the processing unit. The program code may be stored in a data storage of the processing unit.

The invention also comprises the combinations of the features of the different embodiments.

In the following an exemplary implementation of the invention is described.

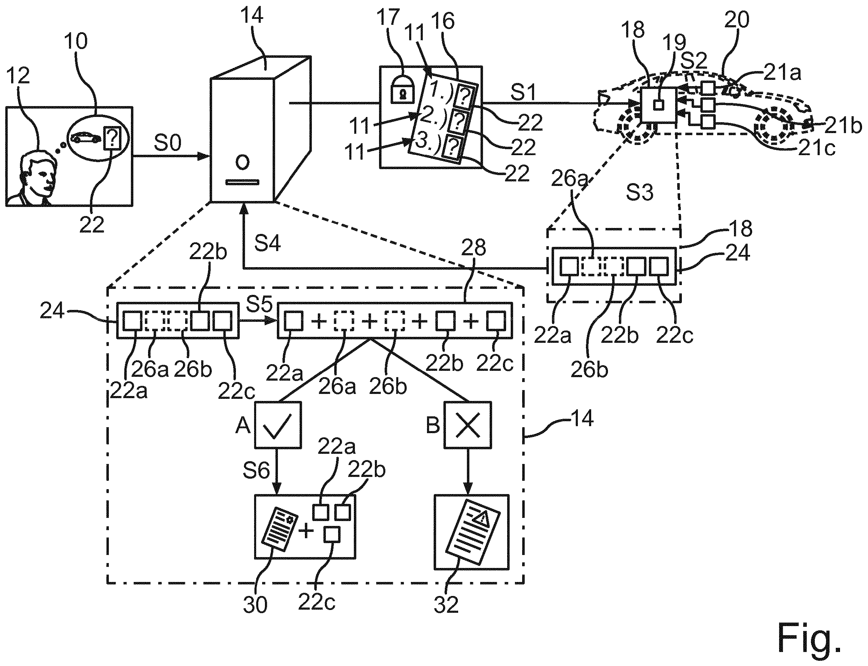

The figure shows in the only figure (Fig.) a schematic illustration of a method for validating vehicle data of a designated vehicle.

The embodiment explained in the following is a preferred embodiment of the invention. However, in the embodiment, the described components of the embodiment each represent individual features of the invention which are to be considered independently of each other and which each develop the invention also independently of each other and thereby are also to be regarded as a component of the invention in individual manner or in another than the shown combination. Furthermore, the described embodiment can also be supplemented by further features of the invention already described.

In the only Fig. it is sketched that in order to validate vehicle data of a designated vehicle first a request 10 for specific vehicle data 22 of the designated vehicle is created by a person 12 and sent to an off-vehicle server unit 14. Alternatively, the request 10 could be created by a vehicle selling platform and/or a vehicle manufacturer, either automatically or upon manual inquiry by the person 12. Person 12 could be a potential buyer or seller of the designated vehicle. The described creation of the request 10 takes place in a step S0. The request 10 contains for example details on which vehicle data 22 shall be collected from the designated vehicle and provided to the person 12.

Afterwards in a step S1, the server unit 14 creates and then transmits a configuration file 16 to a data collecting device 18 of a presumed vehicle 20. The presumed vehicle 20 is the vehicle that is presumed to be the designated vehicle. The presumed vehicle 20 is accordingly the vehicle that is allegedly the designated vehicle. The designated vehicle is the vehicle that provides vehicle data 22 in which interest exists regarding a validity of this vehicle data 22.

The configuration file 16 comprises at least one transmission request signal 11 for specific vehicle data 22 of the designated vehicle. The configuration file 16 is in this case an encrypted file 17. The data collecting device 18 of the presumed vehicle 20 retrieves in a step S2 the requested specific vehicle data 22 from at least one control unit 21 of the presumed vehicle 20. Here, three control units 21a, 21b, 21c each retrieve one element of specific vehicle data 22a, 22b, 22c. The requested specific vehicle data 22a, 22b, 22c is retrieved according to the at least one transmission request signal 11. The individual control units 21a, 21b, 21c are, for example, an odometer of the vehicle (21a), a temperature sensor (21b) and a break acceleration measurement sensor (21c). As specific vehicle data 22a, 22b, 22c are thus provided a total length value of driven distance (22a), i.e., an odometer reading value, an engine temperature value (22b) and a break acceleration value (22c). As requested specific vehicle data 22a, 22b, 22c either raw sensor data and/or processed data are retrieved from the at least one control unit 21a, 21b, 21c.

As a next step S3 performed by the data collecting device 18 of the presumed vehicle 20, the retrieved specific vehicle data 22a, 22b, 22c is assembled as a specific data item 24 according to a prescribed data assembling rule. The prescribed data assembling rule comprises a pattern definition specifying an order in which the retrieved specific vehicle data 22a, 22b. 22c is assembled. In this case, the three data packages are retrieved in the order: first vehicle data 22a, then vehicle data 22b and at last vehicle data 22c. The prescribed data assembling rule further comprises a filler rule specifying at least one specific data package 26a, 26b to be embedded at a respective predefined position within the specific data item 24. In this case both specific data packages 26a, 26b that each serve as a filler data package are put into the specific data item 24 between the specific data 22a and the specific vehicle data 22b. The specific data package 26a, 26b is for example a specific six-digit number particularly chosen for the designated vehicle.

The prescribed data assembling rule is created by the data collecting device 18 according to a creating rule that is unique to the designate vehicle. The creating rule is modified in specific time intervals, for example, every two days, and/or after a specific amount of received configuration files 16, for example after every fifth configuration file 16 is received by the data collecting device 18. In case of a changing prescribed data assembling rule, the data collecting device 18 comprises a configuration unit 19 that is designed to create the new data assembling rule. This means that with the configuration unit 19 a specific pattern is generated that can also be referred to as a "signal train". The "signal train" indicates in which order and with which specific data package 26a, 26b the retrieved vehicle data 22a, 22b, 22c are supposed to be assembled.

In a next step S4, the created specific data item 24 is transmitted to an evaluation unit 14 which is here the off-vehicle server unit 14. Alternatively, the evaluation unit 14 could be an on-board unit of the presumed vehicle 20. By the off-vehicle server unit 14 as evaluation unit 14, the disassembling of the transmitted specific data item 24 is done. This happens according to a prescribed data disassembling rule. While disassembling the transmitted specific data item 24, it is verified in a step S5 if the transmitted specific data item 24 features the prescribed data assembling rule. In this step S5, individual elements of the specific vehicle data 22a, 22b, 22c as well as the specific data packages 26a, 26b are disassembled while it is checked if their order within the specific data item 24 indicates that they had been assembled according to the prescribed data assembling rule. Only if the transmitted specific data item 24 actually features the prescribed data assembling rule, which is determined after having created a disassembled data sequence 28, it is possible to validate that the disassembled specific vehicle data is correct and unmanipulated. This is followed by a validating step S6. In step S6 a certificate 30 is created that indicates that the presumed vehicle 20 is actually the designated vehicle and that the vehicle data 22 is proven free of manipulation. This means that the vehicle data 22a, 22b, 22c of the presumed vehicle is validated and therefore provided for further use. The vehicle data can now, for example, be sent to the person 12 who sent the request 10 for the validation and/or the specific vehicle data 22a, 22b, 22c in the first place. This situation is sketched as situation A in the only Fig.

If, however, the transmitted specific data item 24 does not feature the prescribed data assembling rule, the disassembled specific vehicle data sequence 28 cannot be validated. This results in a warning 32 indicating that the vehicle data 22 of the designated vehicle has been tampered with and/or that the presumed vehicle does not seem to be the designated vehicle. This situation is sketched as situation B in the only Fig.

However, the result indicating that the presumed vehicle 20 is not the designated vehicle can be excluded in case for example a short distance communication method, such as Bluetooth, was used to communicate between the off-vehicle server unit and the presumed vehicle 20. Alternatively or additionally, it is possible to use the encrypted file 17 of the configuration file 16 to make sure that only the designated vehicle can open the configuration file 16 and do the described steps.

As a summary signal hopping to authenticate transmitted data was shown. Therefore, first person 12 wanted to obtain valid vehicle data 22. Accordingly, a corresponding request 10 was sent based on which the configuration file 16 was generated and transmitted to the data collecting device 18 of the vehicle. There, the main signals being for example raw data or control unit data as specific vehicle data 22 are put into an order. Additionally a validation signal is obtained and put in between the ordered specific vehicle data 22. The validation signal is referred to as specific data package 26a, 26b. Then, all specific vehicle data 22 and specific data packages 26a, 26b is assembled as the "signal train" to form the specific data item 24. The "signal train" that corresponds to the specific data item 24 is sent to the server unit 14 where it is deconvoluted and either accepted as matching or rejected as not matching the prescribed data assembling rule. The specific data packages 26a, 26b are predetermined and known to the server unit 14. A hacker would then have to literally crack every single vehicle to understand and be able to fake the specific vehicle data 22. The "signal train" is dictated by the configuration file 16 as well as the prescribed data assembling rule.

## Claims

1. Method for validating vehicle data of a designated vehicle, the method comprising:
- transmitting a configuration file (16) to a data collecting device (18) of a vehicle that is presumed to be the designated vehicle, wherein the configuration file (16) comprises at least one transmission request signal (11) for specific vehicle data (22) of the designated vehicle (S1);
- by the data collecting device (18), retrieving the requested specific vehicle data (22) according to the at least one transmission request signal (11) from at least one control unit (21) of the presumed vehicle (20) (S2);
- by the data collecting device (18), assembling the retrieved specific vehicle data (22) as a specific data item (24) according to a prescribed data assembling rule, wherein the prescribed data assembling rule is created by the data collecting device (18) according to a creating rule that is unique to the designated vehicle and the prescribed data assembling rule comprises a pattern definition specifying an order in which the retrieved specific vehicle data (22) is assembled (S3);
- by the data collecting device (18), transmitting the specific data item (24) to an evaluation unit (14) (S4);
- by the evaluation unit (14), disassembling of the transmitted specific data item (24) according to a prescribed data disassembling rule, whereby it is verified if the transmitted specific data item (24) features the prescribed data assembling rule (S5);
- only if the transmitted specific data item (24) features the prescribed data assembling rule, validating the disassembled specific vehicle data (28) as the vehicle data of the designated vehicle and providing the validated specific vehicle data (22) (S6).

2. Method according to claim 1, wherein the prescribed data assembling rule comprises a filler rule specifying at least one specific data package (26a, 26b) to be embedded at a respective predefined position within the specific data item (24).

3. Method according to any of the preceding claims, wherein the creating rule is modified in specific time intervals and/or after a specific amount of received configuration files (16).

4. Method according to any of the preceding claims, wherein as requested specific vehicle data (22) raw sensor data and/or processed data are retrieved from the at least one control unit (21).

5. Method according to any of the preceding claims, wherein the configuration file (16) is transmitted as an encrypted file (17).

6. A system comprising a vehicle (20) and an evaluation unit (14), said vehicle comprising at least one control unit (21) and a data collecting device (18), wherein the system is designed to conduct the method as described in any of the preceding claims.

## Patentansprüche

1. Verfahren zum Validieren von Fahrzeugdaten eines vorgesehenen Fahrzeugs, wobei das Verfahren umfasst:
- Übertragen einer Konfigurationsdatei (16) an eine Datenerfassungsvorrichtung (18) eines Fahrzeugs, das als das vorgesehene Fahrzeug angenommen wird, wobei die Konfigurationsdatei (16) mindestens ein Übertragungsanforderungssignal (11) für bestimmte Fahrzeugdaten (22) des vorgesehenen Fahrzeugs umfasst (S1);
- Abrufen der angeforderten bestimmten Fahrzeugdaten (22) durch die Datenerfassungsvorrichtung (18) gemäß dem mindestens einen Übertragungsanforderungssignal (11) von mindestens einer Steuereinheit (21) des angenommenen Fahrzeugs (20) (S2);
- Zusammenstellen der abgerufenen bestimmten Fahrzeugdaten (22) als bestimmtes Datenobjekt (24) gemäß einer vorgeschriebenen Datenzusammenstellungsregel durch die Datenerfassungsvorrichtung (18), wobei die vorgeschriebene Datenzusammenstellungsregel von der Datenerfassungsvorrichtung (18) gemäß einer für das vorgesehene Fahrzeug einzigartigen Erstellungsregel erstellt wird und die vorgeschriebene Datenzusammenstellungsregel eine Musterdefinition umfasst, die eine Reihenfolge bestimmt, in der die abgerufenen bestimmten Fahrzeugdaten (22) zusammengestellt werden (S3);
- durch die Datenerfassungsvorrichtung (18), Übertragen des bestimmten Datenobjekts (24) an eine Auswerteeinheit (14) (S4);
- durch die Auswerteeinheit (14), Zerlegen des übertragenen bestimmten Datenobjekts (24) gemäß einer vorgeschriebenen Datenzerlegungsregel, wobei überprüft wird, ob das übertragene bestimmte Datenobjekt (24) die vorgeschriebene Datenzusammenstellungsregel (S5) nutzt;
- nur wenn das übertragene bestimmte Datenobjekt (24) die vorgeschriebene Datenzusammenstellungsregel aufweist, Validieren der zerlegten bestimmten Fahrzeugdaten (28) als Fahrzeugdaten des vorgesehenen Fahrzeugs und Bereitstellen der validierten bestimmten Fahrzeugdaten (22) (S6).

2. Verfahren nach Anspruch 1, wobei die vorgeschriebene Datenzusammenstellungsregel eine Auffüllregel umfasst, die mindestens ein bestimmtes Datenpaket (26a, 26b) bestimmt, das an einer jeweiligen vordefinierten Position innerhalb des bestimmten Datenobjekts (24) eingebettet werden soll.

3. Verfahren nach einem der vorhergehenden Ansprüche, wobei die Erstellungsregel in bestimmten Zeitintervallen und/oder nach einer bestimmten Anzahl empfangener Konfigurationsdateien (16) modifiziert wird.

4. Verfahren nach einem der vorhergehenden Ansprüche, wobei angeforderte bestimmte Fahrzeugdaten (22), Rohsensordaten und/oder verarbeitete Daten aus der mindestens einen Steuereinheit (21) abgerufen werden.

5. Verfahren nach einem der vorhergehenden Ansprüche, wobei die Konfigurationsdatei (16) als verschlüsselte Datei (17) übertragen wird.

6. System, das ein Fahrzeug (20) und eine Auswerteeinheit (14) umfasst, wobei das Fahrzeug mindestens eine Steuereinheit (21) und eine Datenerfassungsvorrichtung (18) umfasst, wobei das System dazu ausgelegt ist, das in einem der vorhergehenden Ansprüche beschriebene Verfahren durchzuführen.

## Revendications

1. Procédé de validation de données de véhicule d'un véhicule désigné, le procédé comprenant :
- la transmission d'un fichier de configuration (16) à un dispositif de collecte de données (18) d'un véhicule présumé être le véhicule désigné, le fichier de configuration (16) comprenant au moins un signal de requête de transmission (11) pour des données spécifiques de véhicule (22) du véhicule désigné (S1) ;
- la récupération, par le dispositif de collecte de données (18), des données spécifiques de véhicule (22) demandées en fonction dudit au moins un signal de requête de transmission (11) à partir d'au moins une unité de commande (21) du véhicule présumé (20) (S2) ;
- l'assemblage, par le dispositif de collecte de données (18), des données spécifiques de véhicule (22) récupérées sous forme d'élément de données spécifique (24) conformément à une règle prescrite d'assemblage de données, ladite règle prescrite d'assemblage de données étant créée par le dispositif de collecte de données (18) selon une règle de création unique au véhicule désigné, et ladite règle prescrite d'assemblage de données comprenant une définition de modèle indiquant un ordre dans lequel les données spécifiques de véhicule (22) récupérées sont assemblées (S3) ;
- la transmission, par le dispositif de collecte de données (18), de l'élément de données spécifique (24) à une unité d'évaluation (14) (S4) ;
- le désassemblage, par l'unité d'évaluation (14), de l'élément de données spécifique (24) transmis selon la règle prescrite de désassemblage de données, permettant de vérifier si l'élément de données spécifique (24) transmis intègre la règle prescrite d'assemblage de données (S5) ;
- uniquement si l'élément de données spécifique (24) transmis intègre la règle prescrite d'assemblage de données, la validation des données spécifiques de véhicule désassemblées (28) en tant que données de véhicule du véhicule désigné, et la fourniture des données spécifiques de véhicule (22) (S6) validées.

2. Procédé selon la revendication 1, dans lequel la règle prescrite d'assemblage de données comprend une règle de remplissage spécifiant au moins un paquet de données spécifique (26a, 26b) à intégrer à une position prédéfinie respective au sein de l'élément de données spécifique (24).

3. Procédé selon l'une quelconque des revendications précédentes, dans lequel la règle de création est modifiée à des intervalles de temps spécifiques et/ou après réception d'un nombre spécifique de fichiers de configuration (16).

4. Procédé selon l'une quelconque des revendications précédentes, dans lequel les données spécifiques de véhicule (22) demandées, à savoir des données brutes de capteur et/ou des données traitées, sont extraites de ladite au moins une unité de commande (21).

5. Procédé selon l'une quelconque des revendications précédentes, dans lequel, le fichier de configuration (16) est transmis sous forme de fichier crypté (17).

6. Système comprenant un véhicule (20) et une unité d'évaluation (14), ledit véhicule comportant au moins une unité de commande (21) et un dispositif de collecte de données (18), le système étant conçu pour mettre en œuvre le procédé tel que décrit dans l'une quelconque des revendications précédentes.
